# EUROPEAN PATENT APPLICATION

(11) **EP 0 858 940 A1**
(43) Date of publication of application: **19.08.1998**
(21) Application number: 98102516.6
(22) Date of filing: 13.02.1998
(51) Int. Cl.: B62B 9/08

(54) **Braking device particularly for baby carriages, strollers and the like**

(30) Priority: 18.02.1997 IT MI970348
(71) Applicant: CAM IL MONDO DEL BAMBINO S.p.A., I-24060 Telgate (BG) (IT)
(72) Inventor: Rho, Gianfranco, 24060 Telgate (Prov. of Bergamo) (IT)
(74) Representative: Modiano, Guido, Dr.-Ing.

(57) **Abstract**

A braking device particularly for baby carriages, strollers and the like, comprising at least one locking element (10) which is associated with a frame of a baby carriage, stroller and the like and can move axially with respect to the rotation axis of a wheel (3) in order to detachably engage a contoured body (20) which is rigidly associated with the hub of the wheel (3). The locking element (10) has at least one portion (13) interfering with the contoured body (20) in order to prevent its rotation.

## Description

The present invention relates to a braking device particularly for baby carriages, strollers and the like.

Conventional baby carriages, strollers and the like used for babies are provided with braking devices which act on the wheels and must be operated in order to keep the stroller in position.

One braking device typically used has a block or similar elements acting on the peripheral region of the wheel with a substantially radial coupling motion.

This type of solution entails the drawback that the locking action is not safely stable, since mutual sliding can occur; moreover, the element for actuating the braking blocks, which is arranged substantially to the side of the rear axle of the wheels, forms a protruding part which can interfere with the feet of the user during normal use of a baby carriage and the like.

Another solution provides a locking element which enters an opening or holes formed on the wheel with an inserting motion occurring along a direction which is substantially parallel to the axle of the wheels.

This type of solution still entails the drawback of having a certain bulk towards the rear part and further it is necessary to perform insertion by correctly placing the wheel with respect to the insertion pin, with the possibility of incorrect applications of the braking device or of forcing actions on the actuation mechanism.

The aim of the present invention is to solve the above-described problem, providing a braking device particularly for baby carriages, strollers and the like which allows to avoid creating excess bulk towards the rear region of the stroller, so that there is no hindrance for the user.

Within the scope of this aim, a particular object of the invention is to provide a braking device wherein the locking coupling can be performed automatically with an elastic thrust which frees the user of the need to position correctly and mutually the two elements that must be coupled, since said coupling occurs automatically.

Another object of the present invention is to provide a braking device wherein brake engagement and release can be performed with simple and quick movements which do not require particular skill by the user.

Another object of the present invention is to provide a braking device which thanks to its particular constructive characteristics is capable of giving the greatest assurances of reliability and safety in use and is also competitive from a merely economical point of view.

This aim, these objects and others which will become apparent hereinafter are achieved by a braking device particularly for baby carriages, strollers and the like, according to the invention, characterized in that it comprises at least one locking element which is associated with a frame of a baby carriage, stroller and the like and can move axially with respect to the rotation axis of a wheel of the frame in order to detachably engage a contoured body which is rigidly associated with the hub of said wheel, said locking element having at least one portion interfering with said contoured body in order to prevent its rotation.

Further characteristics and advantages of the braking device particularly for baby carriages, strollers and the like according to the present invention will become apparent from the following detailed description of a preferred but not exclusive embodiment thereof, illustrated only by way of non-limitative example in the accompanying drawings, wherein:

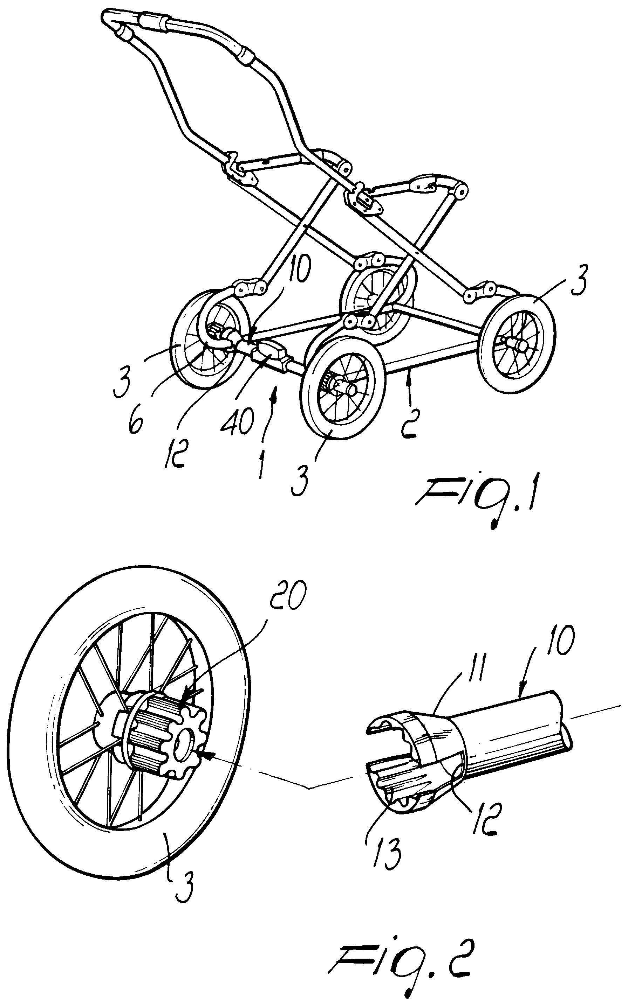

figure 1 is a schematic perspective view of a frame for baby carriages, strollers and the like, with the braking device according to the present invention;
figure 2 is an exploded perspective view of the contoured body and of the locking element;
figure 3 is a partially sectional view of the braking device in the inactive position;
figure 4 is a partially sectional view of the braking device during engagement;
figure 5 is a view of the braking device in the locking position;
figure 6 is a sectional view, taken along the plane VI-VI of figure 3;
figure 7 is a sectional view, taken along the plane VII-VII of figure 4;
figure 8 is a sectional view, taken along the plane VIII-VIII of figure 5.

With reference to the above figures, the braking device particularly for baby carriages, strollers and the like, generally designated by the reference numeral 1, is installed at a frame 2, provided with wheels 3 and is typically used to mount a bassinet, basket, seat or the like, so as to form a baby carriage, a stroller, or other accessories generally used for babies.

The braking device 1 is arranged at the axle 5 that joins the rear wheels 3 and in practice connects them to the frame 2 and more specifically to a connecting portion designated by the reference numeral 6, which is provided at the lower part of the frame 2.

The braking device according to the invention comprises a locking element, generally designated by the reference numeral 10, which is associated with the frame connecting portion 6 so that it cannot rotate but so that it can move axially along an axle 5 constituting the wheel rotation axis.

In greater detail, on said axle 5 two locking elements 10 are provided and are arranged symmetrically with respect to the center and act correspondingly on the two wheels 3.

Each locking element 10 has, at one end, a flared portion 11 which is fork-shaped and forms a recess 12 which couples to the connecting portion 6 so that it cannot be rotated.

The flared portion 11 is internally provided with a contoured portion, designated by the reference numeral 13, which can be coupled detachably to a contoured body 20 which is fixed at the hub of the wheels 3 and which, in the illustrated example, is a body with lobate teeth; correspondingly, the contoured portion 13 of the flared portion 11 is shaped complementarily, so that when engagement occurs the rotation of the wheel 3 is locked.

Inside the locking element 10 a guiding bar 30 is provided and abuts against a connecting block 31 which connects to the coupling portion 6 of the frame 2 and cannot rotate but in practice surrounds the axle 5.

An actuation piston 35 slidingly engages the guiding bar 30 and is connected to an actuator 40 described hereinafter.

A pusher spring 50 acts on the actuation piston 35 at the end that lies opposite to the one connected to the actuator 40 and abuts against a central abutment 51 of the internal cavity of the locking element 10. A return spring 52 acts at the other end of the central abutment 51 and abuts against the connecting block 31.

The pusher spring 50 is configured so that in the actuation position, i.e., when the piston 35 is in the inserted position, it applies a thrust greater than the thrust applied by the return spring 52.

The actuator 40 is provided with a guiding body 41 which accommodates the outer ends 35a and pistons 35 which are arranged opposite to each other. The actuator forms a guiding seat for an actuation button 42 provided with actuation slots 43 having vertical portions 44 leading into converging portions 45, wherein there engages a pivot 46 rigidly coupled to the outer ends 35a of the pistons 35, which are thus guided.

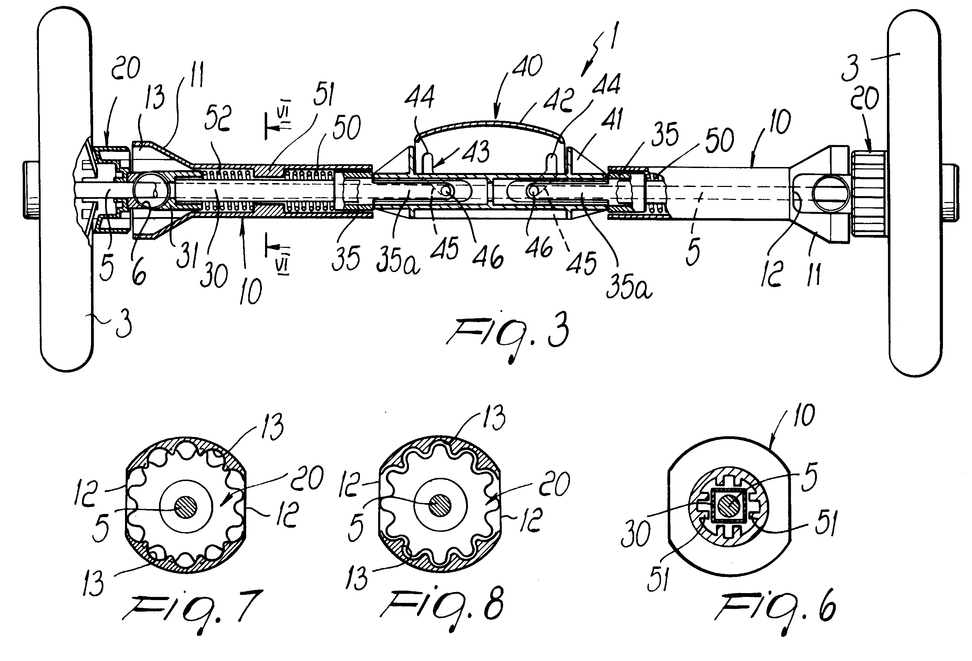

When the actuation button 42 is in the raised position, as shown in figure 3, the pusher spring 50 is in the released position and the return spring 52 pushes the locking element 10 towards the central portion, disengaging its contoured portion 13 from the contoured body 20.

By applying pressure to the actuation button 42, the pivots 46, by moving along the slots 45, in practice produce a thrust on the pistons 35, which compress the spring 50. The pusher spring 50 pushes the locking element 10, which is made to move towards the wheel 3.

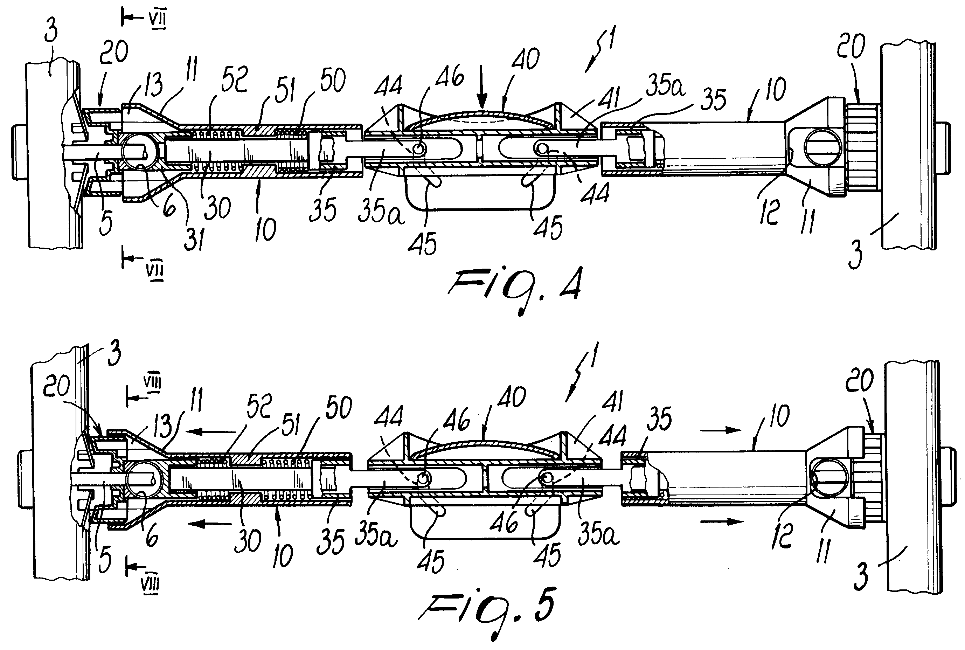

If the contoured portion 13 is arranged correspondingly with respect to the contoured body 20, free translatory motion occurs, producing a locking coupling. If instead the contoured portions 13 and the contoured body 20 mutually interfere, as shown in figure 4, the element 10 cannot perform a translatory motion and the pusher spring 50 is compressed.

It is sufficient to perform a minimal rotation of the wheels 3 to place the contoured body 20 so that it is correspondingly positioned with respect to the contoured portion 13, so that the pusher spring, whose thrust is stronger than the contrast applied by the return spring 52, pushes the element 10, as shown in figure 5, producing the coupling of the contoured portion and of the contoured body 20 which prevents rotation.

It is thus evident that locking always occurs automatically, since when the activation button 42 is pressed, the pusher spring 50, capable of producing the locking action if this does not occur directly, is compressed.

In order to perform release it is sufficient to produce the upward translatory motion of the actuation button 42, so that the pivots 46, by sliding in the slots 43, move into the end of the converging portion 45, consequently causing the retraction of the pistons 35 and the release of the pusher spring 50, so that the return spring moves the locking element 10 in the opposite direction, i.e., towards the center, disengaging the contoured portion 13 from the contoured body 20.

From the above description it is thus evident that the invention achieves the intended aim and objects, and in particular the fact is stressed that a braking device is provided which is arranged on the axle of the rear wheels and accordingly produces no rearward bulk.

Further, the particular refinement of using a pusher spring and a return spring which is unable to contrast the thrust of the pusher spring when it is activated allows to always produce coupling, since actuation allows to preset the engagement of the brake even when the contoured portion and the contoured body are in a mutually interfering position, without creating forcings and with the possibility of automatic engagement as soon as the contoured portion can fit over the contoured body.

The invention thus conceived is susceptible of numerous modifications and variations, all of which are within the scope of the inventive concept.

All the details may also be replaced with other technically equivalent elements.

In practice, the materials employed, as well as the dimensions and the contingent shapes, may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A braking device particularly for baby carriages, strollers and the like, characterized in that it comprises at least one locking element which is associated with a frame of a baby carriage, stroller and the like and can move axially with respect to the rotation axis of a wheel of the frame in order to detachably engage a contoured body which is rigidly associated with the hub of said wheel, said locking element having at least one portion interfering with said contoured body in order to prevent its rotation.

2. A braking device according to claim 1,
characterized in that said locking element is associated with a coupling portion of the frame of the baby carriage, stroller and the like, the coupling being adapted to prevent the rotation of said locking element.

3. A braking device according to claim 1,
characterized in that it comprises two locking elements which are arranged symmetrically around the wheel rotation axle.

4. A braking device according to claim 2,
characterized in that said locking element has, at one end, a flared portion which is fork-shaped and forms a recess which couples to said coupling portion, said flared portion forming internally said contoured body.

5. A braking device according to claim 4,
characterized in that said contoured body has a shape with lobate teeth, said contoured body having a substantially complementary configuration.

6. A braking device according to claim 2,
characterized in that it comprises, inside said locking element, a guiding bar which abuts against a connecting block connected to said portion for coupling to the frame, an actuation piston slidingly engaging said guiding bar, said piston being connected to an actuator, a pusher spring acting on said actuation piston, at the end that is opposite to the end of said actuator, said pusher spring abutting against a central abutment formed inside said locking element.

7. A braking device according to claim 6,
characterized in that it comprises a return spring which abuts against said central abutment, on the opposite side with respect to said pusher spring, and against said connecting block.

8. A braking device according to claim 7,
characterized in that said pusher spring, in the actuation position, i.e., when said piston is in the position for the engagement of the braking device, is suitable to apply a thrust which is greater than the thrust applied by said return spring in the compressed position.

9. A braking device according to claim 7,
characterized in that it comprises an actuator which acts on said piston, provided by means of a guiding body which supports the outer ends of said piston which are opposite to each other and forming the guiding seat for an actuation button which can move at right angles to the direction of motion of said pistons and has slots provided with vertical portions which lead into converging portions in which there engage pivots which are rigidly coupled to the outer ends of said pistons.

10. A braking device according to claim 9,
characterized in that the actuation of said actuation button, with the engagement of said pivots in said vertical portions, is adapted to produce a translatory motion of said pistons with compression of said pusher spring and of said return spring.

11. A braking device according to claim 9,
characterized in that when said pivots are engaged in an end portion of said converging portion of said slots, said pusher spring is substantially released and is adapted to apply a force which is weaker than the thrust applied by said return spring.
